# EUROPEAN PATENT SPECIFICATION

(11) **EP 2 878 167 B1**
(45) Date of publication and mention of the grant of the patent: **04.01.2017**
(21) Application number: 13748158.6
(22) Date of filing: 26.07.2013
(51) Int. Cl.: H04W 76/02

(54) **IP-LAYER DEVICE-TO-DEVICE COMMUNICATION IN MOBILE NETWORKS**
GERÄT-GERÄT-KOMMUNIKATION AUF IP-SCHICHT IN MOBILEN NETZWERKEN
COMMUNICATION DE DISPOSITIF À DISPOSITIF EN COUCHE IP DANS DES RÉSEAUX MOBILES

(30) Priority: 27.07.2012 US 201261676757 P
(43) Date of publication of application: 03.06.2015
(73) Proprietor: Interdigital Patent Holdings, Inc., Wilmington, DE 19809 (US)
(72) Inventor: REZNIK, Alexander, Titusville, NJ 08560 (US); ZUNIGA, Juan, Carlos, Montreal, QC H4L 3J4 (CA)
(74) Representative: Awapatent AB
(86) International application number: PCT/US2013/052171
(87) International publication number: WO 2014/018820

(56) References cited:
- US-A1- 2006 168 343
- US-A1- 2010 009 675
- US-A1- 2011 117 907

## Description

### BACKGROUND

Internet Protocol IP mobility management may play a role in providing an always-on and ubiquitous service between devices, such as wireless communication devices and the networks on which such devices operate. For instance; mobility management schemes standardized by Internet Engineering Task Force (IETF) for Internet Protocol version 6 (IPv6) networks may be extensions or modifications of the Mobile IPv6 protocol (MIPv6), such as Proxy Mobile IPv6 (PMIPv6), Dual Stack Mobile IPv6 (DSMIPv6), and Hierarchical Mobile IPv6 (HMIPv6). Current mobility management schemes have many problems.

Prior art documents US2006168343 and US2011117907 disclose examples of networks employing device to device communications and dealing with connection failures in different manners than the current application.

### SUMMARY

Systems, methods, and instrumentalities are disclosed to manage device to device (D2D) communications. A first wireless transmit/receive unit (WTRU) may have a D2D connection with a second WTRU. The D2D connection may use a home address (HoA) internet protocol (IP) address. The first WTRU may detect a loss of the D2D connection between the first WTRU and the second WTRU. The first WTRU may detect the loss of the D2D connection via a low-layer (e.g. the physical layer (PHY), the media access control layer (MAC), etc.) link measurement and/or monitoring congestion of the wireless network (e.g. a transmission control protocol (TCP) congestion measurement). For example, one or more of the following may apply. The low-layer link measurement may be communicated to higher layers. The WTRU may set a TCP congestion threshold that may be associated with a loss (e.g., an effective loss) of the D2D connection, e.g., observed signal power may not be reduced but congestion may indicate that the WTRUs may communicate more effectively via the network.

The first WTRU may determine a fallback gateway (GW) that may be associated with a network, e.g., a distributed GW (D-GW). For example, the first WTRU may determine the fallback GW from a list that may include one or more GWs that may be stored on the first WTRU. The first WTRU may send a communication to the fallback GW. The communication to the fallback GW may comprise an indication related to the second WTRU. The indication may comprise a message intended for the second WTRU (e.g., the indication may be that the message is indicated as intended for the second WTRU). The indication may comprise additional signaling (e.g., the indication may be included in the additional signaling, such as signaling of an IP address that may be related to the second WTRU).

The first WTRU may receive a response from the fallback GW. The first WTRU may determine that a fallback is successful based on reception of the response. The response may include at least one of a null response packet or a selective acknowledgment. The first WTRU may abandon the D2D connection based on the response. The connection with the fallback GW may use a care of address (CoA) IP address. The WTRU may restore the D2D connection.

The instant summary is provided to introduce a selection of concepts in a simplified form that are further described below in the Detailed Description. This Summary is not intended to identify key features or essential features of the claimed subject matter, not is it intended to be used to limit the scope of the claimed subject matter.

### BRIER DESCRIPTION OF THE DRAWINGS

A more detailed understanding may be had from the following description, given by way of example in conjunction with the accompanying drawings, in which:
FIG. 1A depicts a system diagram of an example communications system in which one or more disclosed embodiments may be implemented;
FIG. 1B depicts a system diagram of an example wireless transmit/receive unit (WTRU) that may be used within the communications system illustrated in FIG. 1A;
FIG. 1C depicts a system diagram of an example radio access network and an example core network that may be used within the communications system illustrated in FIG. 1A;
FIG. 1D depicts a system diagram of an example radio access network and an example core networks that may be used within the communications system illustrated in FIG. 1A;
FIG. 1E depicts a system diagram of an example radio access network and an example core network that may be used within the communications system illustrated in FIG. 1A;
FIG. 2 depicts an example baseline device-to-device (D2D) connection setup;
FIG. 3 depicts an overview of an example of D2D fallback;
FIG. 4 depicts an example baseline D2D architecture;
FIG. 5 depicts, in a user plane, an example of direct User Equipment (UE) to User Equipment-Gateway (UE-GW) connection;
FIG. 6 depicts example UE-GW connectivity after a loss of a D2D link, in network based Internet protocol Flow Mobility (NB-IFOM) for a common evolved NodeB (eNB)/access point (AP) scenario;
FIG. 7 depicts example UE-GW connectivity after a loss of a D2D link, in NB-IFOM for a serving-GW separate from an eNB serving non-GW;
FIG. 8 depicts example UE-GW connectivity after a loss of a D2D link, in user equipment Internet protocol Flow Mobility (UE-IFOM) for a common eNB/AP scenario;
FIG. 9 depicts example UE-GW connectivity after a loss of a D2D link, in UE-IFOM for a common eNB/AP scenario with a simplified stack;
FIG. 10 depicts example UE-GW connectivity after a loss of a D2D link, in UE-IFOM for a serving-GW separate from an eNB serving non-GW;
FIG. 11 depicts example UE-GW connectivity after a loss of a D2D link, in UE-IFOM for a serving-GW separate from an eNB serving non-GW, with a simplified stack;
FIG. 12 depicts an example control plane for an example scenario when a common eNB or non-3^{rd} Generation Partnership Project (3GPP) AP is used by both UEs for network access when NB-IFOM is utilized;
FIG. 13 depicts an example control plane for an example of NB-IFOM with a common eNB/AP;
FIG. 14 depicts an example control plane for a separated serving distributed gateway (D-GW);
FIG. 15 depicts an example of non-GW UE initiated link-loss recovery, with network-controlled mobility option; and
FIG. 16 depicts an example of non-GW UE initiated link-loss recovery, with UE-controlled mobility option.

### DETAILED DESCRIPTION

A detailed description of illustrative embodiments may now be described with reference to the figures. However, while the present invention may be described in connection with exemplary embodiments, it is not limited thereto and it is to be understood that other embodiments may be used or modifications and additions may be made to the described embodiments for performing the same function of the present invention without deviating therefrom.

Described herein are example proximity services (ProSe) implementations that may enable direct device-to-device (D2D) communication between two mobile devices, which may include establishment of a D2D link using Internet Protocol (IP)-layer connectivity. For example, a non-3^{rd} Generation Partnership Project (non-3GPP) access (such as WiFi) may be used for the D2D link while connectivity to and control via the 3GPP Evolved Packet System (EPS) Core may be maintained. Implementations are described that may be used to derive requirements for IP-layer based D2D operation. The methods and devices described herein may operate in accordance with corresponding IP mobility protocols developed by the Internet Engineering Task Force (IETF) as well as proposed extensions of those protocols designed to support Dynamic and Distributed Mobility Management, known as DMM.

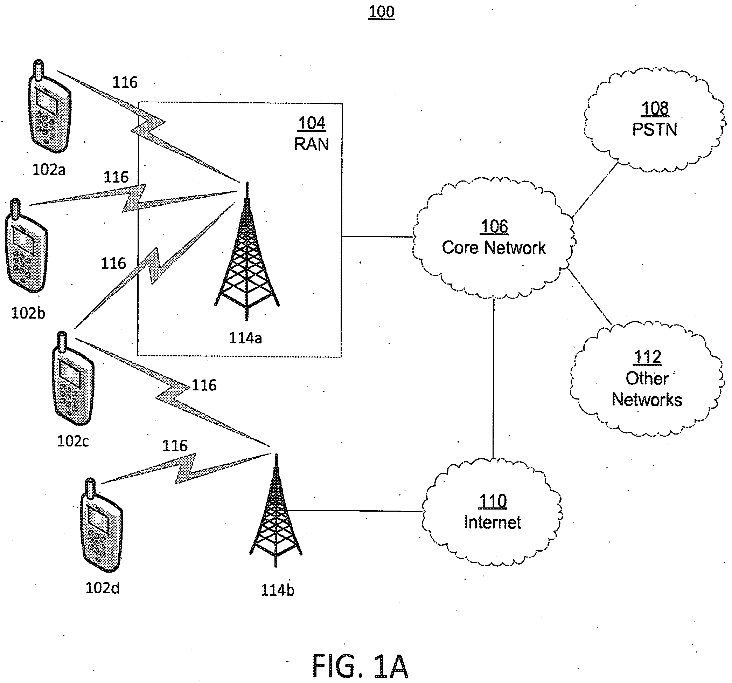

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include at least one wireless transmit/receive unit (WTRU), such as a plurality of WTRUs, for instance WTRUs 102a, 102b, 102c, and 102d, a radio access network (RAN) 104, a core network 106, a public switched telephone network (PSTN) 108, the Internet 110, and other networks 112, though it should be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it should be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VolP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1A, it should be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

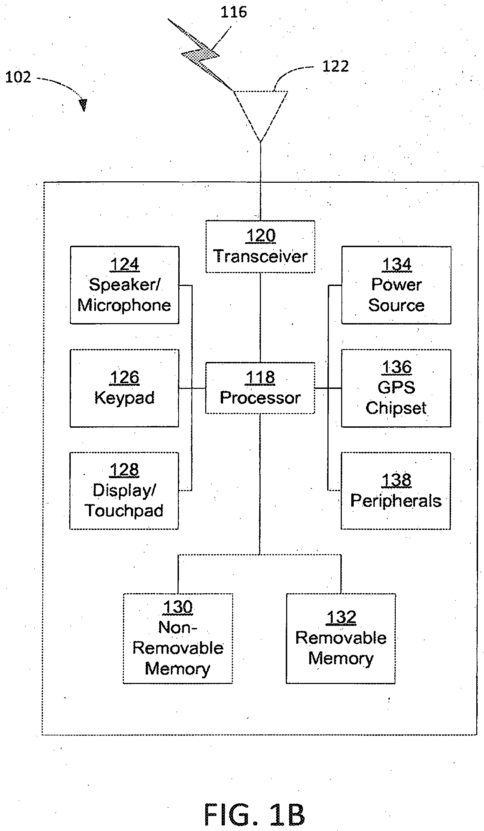

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It should be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it should be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both R.F and light signals. It should be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickelcadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It should be appreciated that the WTRU 102 may acquire location information by way of any suitable location-determination method while remaining consistent with an embodiment.

The processor 118 may further be coupled to other peripherals I38, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth®) module, a frequency modulated (FM) radio unit, a digital music player, a media player, a video game player module, an Internet browser, and the like.

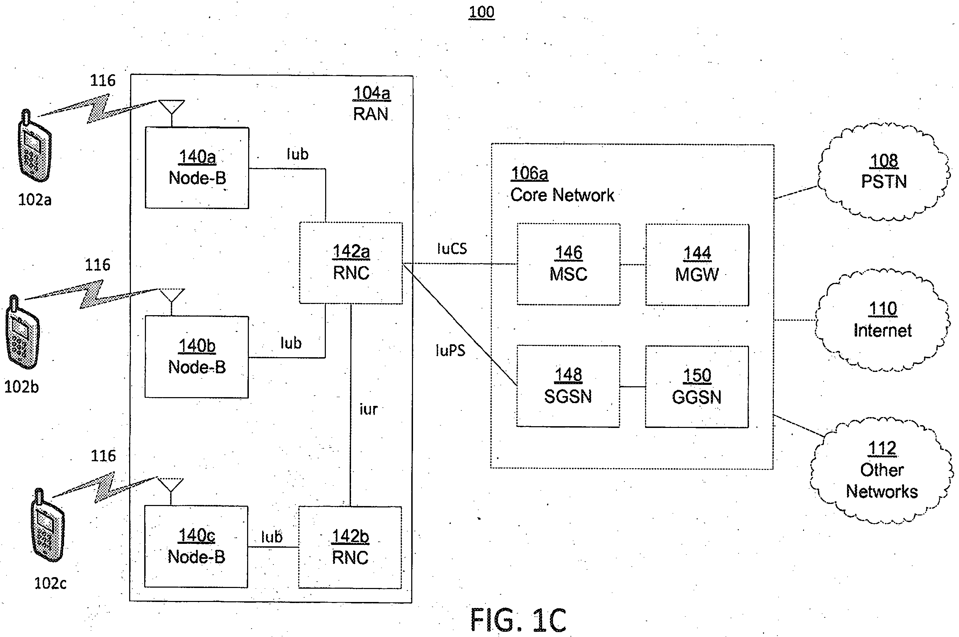

FIG. 1C is a system diagram of an embodiment of the communications system 100 that includes a RAN 104a and a core network 106a that comprise example implementations of the RAN 104 and the core network 106, respectively. As noted above, the RAN 104, for instance the RAN 104a, may employ a UTRA radio technology to communicate with the WTRUs 102a, 102b, and 102c over the air interface 116. The RAN 104a may also be in communication with the core network 106a. As shown in FIG. 1C, the RAN 104a may include Node-Bs 140a, 140b, 140c, which may each include one or more transceivers for communicating with the WTRUs 102a, 102b, 102c over the air interface 116. The Node-Bs 140a, 140b, 140c may each be associated with a particular cell (not shown) within the RAN 104a. The RAN 104a may also include RNCs 142a, 142b. It should be appreciated that the' RAN 104a may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106a shown in FIG. 1 C may include a media gateway (MGW) 144, a mobile switching center (MSC) 146, a serving GPRS support node (SGSN) 148, and/or a gateway GPRS support node (GGSN) 150. While each of the foregoing elements is depicted as part of the core network 106a, it should be appreciated that any one of these elements may be owned and/or operated by an entity other than the core network operator.

The RNC 142a in the RAN 104a may be connected to the MSC 146 in the core network 106a via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 104a may also be connected to the SGSN 148 in the core network 106a via an IuPS interface. The SGSN 148 may be connected to the SGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106a may also be connected to the networks 112, which may include other wired or wireless networks that are owned and/or operated by other service providers.

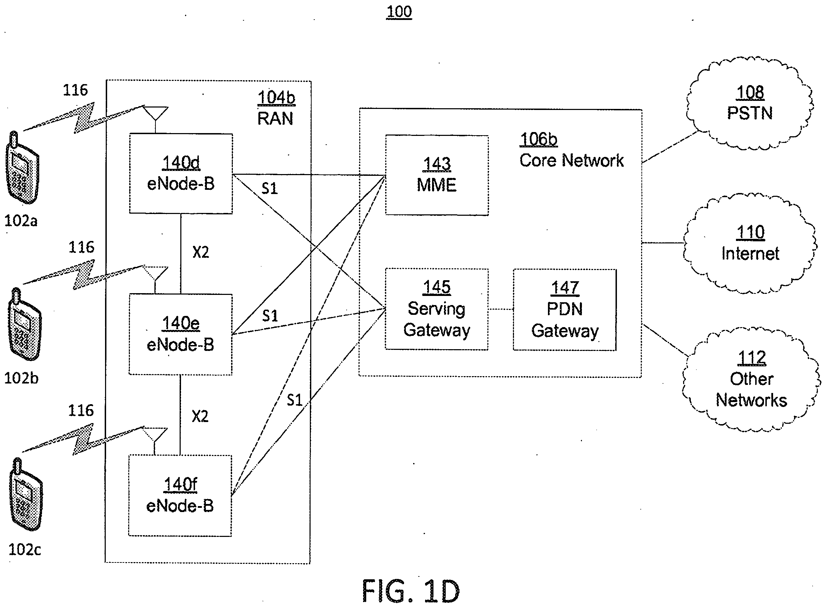

FIG. 1D is a system diagram of an embodiment of the communications system 100 that includes a RAN 104b and a core network 106b that comprise example implementations of the RAN 104 and the core network 106, respectively. As noted above, the RAN 104, for instance the RAN 104b, may employ an E-UTRA radio technology to communicate with the WTRUs 102a, 102b, and 102c over the air interface 116. The RAN 104b may also be in communication with the core network 106b.

The RAN 104b may include eNode-Bs 140d, 140e, 140f, though it should be appreciated that the RAN 104b may include any number of eNode-Bs while remaining consistent with an embodiment. The eNode-Bs 140d, 140e, 140f may each include one or more transceivers for communicating with the WTRUs 102a, 102b, 102c over the air interface 116. In one embodiment, the eNode-Bs 140d, 140e, 140f may implement MIMO technology. Thus, the eNode-B 140d, for example, may use multiple antennas to transmit wireless signals to, and receive wireless signals from, the WTRU 102a.

Each of the eNode-Bs 140d, 140e, and 140f may be associated with a particular cell (not shown) and may be configured to handle radio resource management decisions, handover decisions, scheduling of users in the uplink and/or downlink, and the like. As shown in FIG. 1D, the eNode-Bs 140d, 140e, 140f may communicate with one another over an X2 interface.

The core network 106b shown in FIG. 1D may include a mobility management gateway (MME) 143, a serving gateway 145, and a packet data network (PDN) gateway 147. While each of the foregoing elements is depicted as part of the core network 106b, it should be appreciated that any one of these elements may be owned and/or operated by an entity other than the core network operator.

The MME 143 may be connected to each of the eNode-Bs 140d, 140e, and 140f in the RAN 104b via an S1 interface and may serve as a control node. For example, the MME 143 may be responsible for authenticating users of the WTRUs 102a, 102b, 102c, bearer activation/deactivation, selecting a particular serving gateway during an initial attach of the WTRUs 102a, 102b, 102c, and the like. The MME 143 may also provide a control plane function for switching between the RAN 104b and other RANs (not shown) that employ other radio technologies, such as GSM or WCDMA.

The serving gateway 145 may be connected to each of the eNode Bs 140d, 140e, 140f in the RAN 104b via the S1 interface. The serving gateway 145 may generally route and forward user data packets to/from the WTRUs 102a, 102b, 102c. The serving gateway 145 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 145 may also be connected to the PDN gateway 147, which may provide the WTRUs 102a, 102b, 102c with access to packet-switched networks, such as the Internet 110, to facilitate communications between the WTRUs 102a, 102b, 102c and IP-enabled devices.

The core network 106b may facilitate communications with other networks. For example, the core network 106b may provide the WTRUs 102a, 102b, 102c with access to circuit-switched networks, such as the PSTN 108, to facilitate communications between the WTRUs 102a, 102b, 102c and traditional land-line communications devices. For example, the core network 106b may include, or may communicate with, an IP gateway (e.g., an IP multimedia subsystem (IMS) server) that serves as an interface between the core network 106b and the PSTN 108. In addition, the core network 106b may provide the WTRUs 102a, 102b, 102c with access to the networks 112, which may include other wired or wireless networks that are owned and/or operated by other service providers.

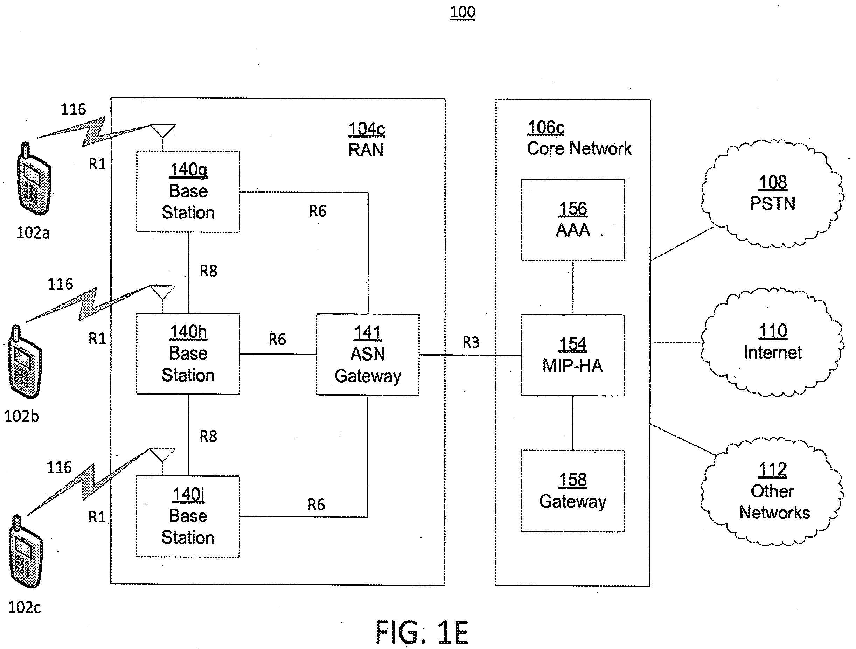

FIG. 1E is a system diagram of an embodiment of the communications system 100 that includes a RAN 104c and a core network 106c that comprise example implementations of the RAN 104 and the core network 106, respectively. The RAN 104, for instance the RAN 104c, may be an access service network (ASN) that employs IEEE 802.16 radio technology to communicate with the WTRUs 102a, 102b, and 102c over the air interface 116. As will be further discussed below, the communication links between the different functional entities of the WTRUs 102a, 102b, 102c, the RAN 104c, and the core network 106c may be defined as reference points.

As shown in FIG. 1E, the RAN 104c may include base stations 102a, 102b, 102c, and an ASN gateway 141, though it should be appreciated that the RAN 104c may include any number of base stations and ASN gateways while remaining consistent with an embodiment. The base stations 102a, 102b, 102c may each be associated with a particular cell (not shown) in the RAN 104c and may each include one or more transceivers for communicating with the WTRUs 102a, 102b, 102c over the air interface 116. In one embodiment, the base stations 140g, 140h, 140i may implement MIMO technology. Thus, the base station 140g, for example, may use multiple antennas to transmit wireless signals to, and receive wireless signals from, the WTRU 102a. The base stations 140g, 140h, 140i may also provide mobility management functions, such as handoff triggering, tunnel establishment, radio resource management, traffic classification, quality of service (QoS) policy enforcement, and the like. The ASN Gateway 141 may serve as a traffic aggregation point and may be responsible for paging, caching of subscriber profiles, routing to the core network 106c, and the like.

The air interface 116 between the WTRUs 102a, 102b, 102c and the RAN 104c may be defined as an R1 reference point that implements the IEEE 802.16 specification. In addition, each of the WTRUs 102a, 102b, and 102c may establish a logical interface (not shown) with the core network 106c. The logical interface between the WTRUs 102a, 102b, 102c and the core network 106c may be defined as an R2 reference point, which may be used for authentication, authorization, IP host configuration management, and/or mobility management.

The communication link between each of the base stations 140g, 140h, 140i may be defined as an R8 reference point that includes protocols for facilitating WTRU handovers and the transfer of data between base stations. The communication link between the base stations 140g, 140h, 140i and the ASN gateway 141 may be defined as an R6 reference point. The R6 reference point may include protocols for facilitating mobility management based on mobility events associated with each of the WTRUs 102a, 102b, 102c.

As shown in FIG. 1E, the RAN 104c may be connected to the core network 106c. The communication link between the RAN 104c and the core network 106c may defined as an R3 reference point that includes protocols for facilitating data transfer and mobility management capabilities, for example. The core network 106c may include a mobile 1P home agent (MIP-HA) 144, an authentication, authorization, accounting (AAA) server 156, and a gateway 158. While each of the foregoing elements is depicted as part of the core network 106c, it should be appreciated that any one of these elements may be owned and/or operated by an entity other than the core network operator.

The MIP-HA may be responsible for IP address management, and may enable the WTRUs 102a, 102b, and 102c to roam between different ASNs and/or different core networks. The MIP-HA 154 may provide the WTRUs 102a, 102b, 102c with access to packet-switched networks, such as the Internet 110, to facilitate communications between the WTRUs 102a, 102b, 102c and IP-enabled devices. The AAA server 156 may be responsible for user authentication and for supporting user services. The gateway 158 may facilitate interworking with other networks. For example, the gateway 158 may provide the WTRUs 102a, 102b, 102c with access to circuit-switched networks, such as the PSTN 108, to facilitate communications between the WTRUs 102a, 102b, 102c and traditional landline communications devices. In addition, the gateway 158 may provide the WTRUs 102a, 102b, 102c with access to the networks 112, which may include other wired or wireless networks that are owned and/or operated by other service providers.

Although not shown in FIG. 1E, it should be appreciated that the RAN 104c may be connected to other ASNs and the core network 106c may be connected to other core networks. The communication link between the RAN 104c the other ASNs may be defined as an R4 reference point, which may include protocols for coordinating the mobility of the WTRUs 102a, 102b, 102c between the RAN 104c and the other ASNs. The communication link between the core network 106c and the other core networks may be defined as an R5 reference point, which may include protocols for facilitating interworking between home core networks and visited core networks.

One or more WTRUs/UEs, such as WTRUs 102a, 102b, 102c, and/or 102d, may be configured as capable of operating over multiple air interfaces, for instance cellular (e.g. 3G), WLAN (e.g. WiFi), etc. Support of multiple cellular modems or multiple WLAN (e.g. WiFi) cards may be possible. Single modem operation may be supported with limitations - e.g. a single 3GPP modem with multiple bearers; a single WiFi modem with multiple VLANs - which may be on the same channel. One or more WTRUs/UEs, such as WTRUs 102a, 102b, 102c, and/or 102d, may be configured as supporting IP tunneling technology, for example Internet Protocol Security (IPsec). One or more WTRUs/UEs, such as WTRUs 102a, 102b, 102c, and/or 102d, may be configured with Enhanced IP-Layer Functionality (for instance using a broad definition of the IP Layer) that may be different than a standard stable IP protocol stack implementation, for example enhanced IP Flow Mobility support.

Core network 106, for instance core networks 106a, 106b, and/or 106c, may be configured to support basic IP Flow Mobility (IFOM) operation, which may include Seamless WiFi Offload. For example, basic IFOM may include one or both of Network-Based IFOM (NB-IFOM) or User Equipment Based IFOM (UE-IFOM). Network-Based IFOM (NB-IFOM) may include IFOM where the movement of a flow between different UE-to-Network interfaces is performed by a network node. PMIP and GTP may, for example, be used as underlying IP Mobility Protocols to support NB-IFOM. User Equipment-Based IFOM (UE-IFOM) may include IFOM where the movement of the flow between different UE-to-Network interfaces is performed by the WTRU. MIP and DSMIP may, for example, be used as underlying IP Mobility Protocols to support UE-IFOM.

Implementations described herein may be configured to operate with IP Flows terminating at the respective UEs. A UE may be operated in a relay mode, e.g., operating a UE as an IP router for another UE.

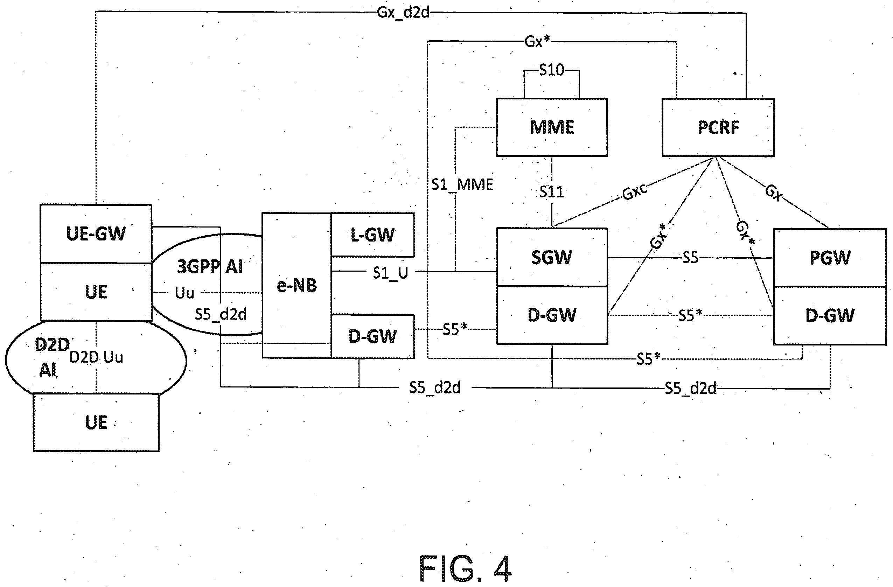

Implementations described herein may involve one or more components of communication system 100. A primary UE may be disclosed, which may be WTRU 102a, 102b, 102c, and/or 102d, or another UE, which may be referred to as the UE of interest. The primary UE may be the UE whose point of view is taken, and may be labeled as pUE in the figures. A correspondent UE may be disclosed, which may be WTRU 102a, 102b, 102c, or 102d, or another UE. The correspondent UE may be a UE that the pUE communicates with using a device-to-device (D2D) link. The correspondent UE may be labeled as cUE in the figures. A Mobile Core Network (MCN) may be disclosed, which may include core network elements and/or local core elements, which may include one or more of the following: one or more Local IP Access (LIPA) Local Gateways (L-GW) (e.g., FIG. 4), one or more Distributed Gateways (D-GW) (e.g., FIG. 4), local identity and policy server(s), one or more Node Bs, or one or more Wireless Local Area Network (WLAN) Access Points (AP). The MCN may include other core network components. The MCN may include one or more Radio Access Network Access Points (RAN AP), for instance a node through which the MCN may communicate with the UEs over the air. A RAN AP may include one or more of the following: Node Bs, Home Node Bs, or WLAN APs.

UE components, such as components of communications system 100, may establish a D2D connection (which may be referred to as a D2D link) and establish an IP Flow over the D2D link and/or move an existing IP flow to an established D2D connection (e.g., a D2D connection that may be created). D2D fallback may be implemented, for instance when a loss of the D2D link is detected (e.g., pUE and cUE are no longer able to communicate with each other) both UEs may be connected to the MCN. The IP flows mapped to the D2D link may be moved to mobile-network-based links. Moving of the D2D link may be transparent to respective applications and/or users of the corresponding UEs.

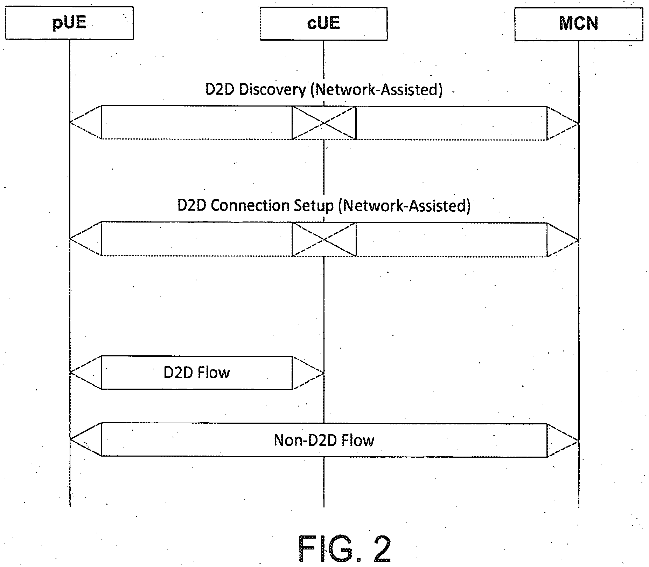

FIG. 2 illustrates an example of a D2D link establishment. The example illustrated in FIG. 2 may apply when a communication session is not yet in progress, when a communication session between the pUE and cUE is in progress and the communication session may need to be moved to a D2D link, etc. As illustrated in FIG. 2, D2D link establishment may include one or more of the following.

D2D discovery may be performed. During D2D discovery, the pUE and cUE may discover each other. The pUE and cUE may have already established the.need to establish a D2D link when D2D discovery is initiated. The pUE and cUE may discover D2D implementations to utilize for communication, and, the pUE and cUE may determine how the D2D connection may be established. D2D discovery may be implemented at Layer 1/Layer 2 (L1/2).

A network-assisted D2D connection setup may be performed. The Network-assisted D2D connection setup may include one or more of the following: establishing the D2D connection, including network-assisted security association (SA) establishment, or connection parameter setup. IP-layer D2D link implementations may be similar to other approaches, except as related to IP address management.

D2D communication may be performed (e.g., when the D2D connection is established). During D2D communication, IP flows between the pUE and cUE may proceed. Flows from one or both UEs (e.g., the pUE and cUE) may be transmitted via the D2D connection; some flows may continue to go through the MCN. Communication between the pUE and the cUE may not be limited to a set number of flows. Flow segregation/mobility concepts may be used. The flows transmitted between the pUE and cUE over the D2D connection may include one or more of the following: an IP Flow (e.g., a created flow) or a previously existing IP Flow that may be mapped to a D2D link (e.g., via IP Flow Mobility or the like).

D2D Fallback may be disclosed, e.g., to address robustness that may be needed for D2D connections e.g., such that loss of the D2D link may not result in a loss of communication between the pUE and the cUE. Loss of the D2D link may be transparent to respective applications and/or users of the corresponding pUE and/or cUE.

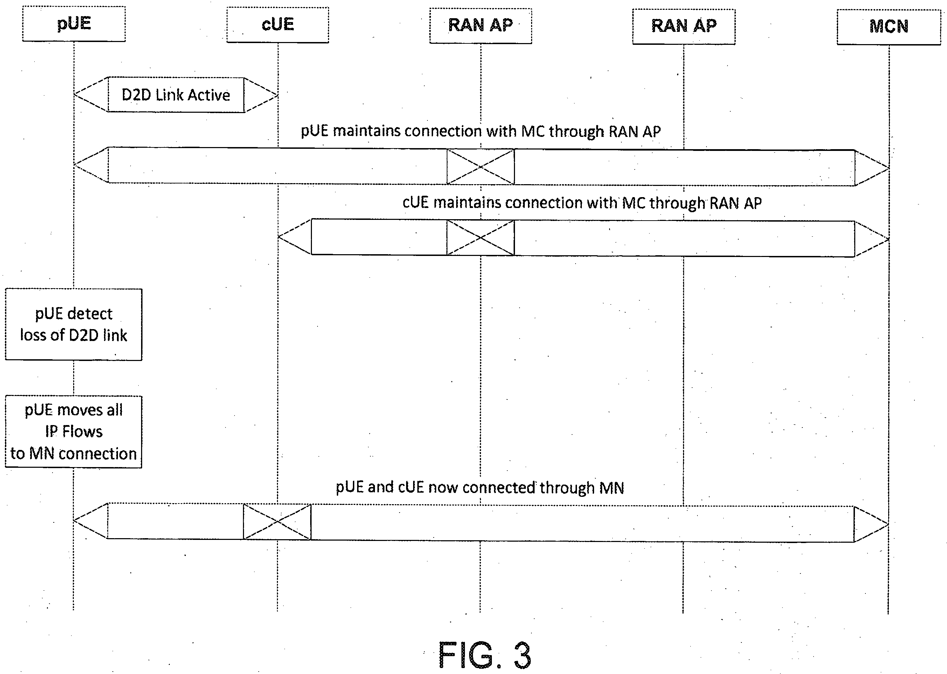

FIG. 3 illustrates exemplary functionality relating to D2D link loss and D2D fallback. Conditions at the outset of D2D fallback) may include one or more of the following: an established, active D2D link between a pUE and a cUE that may have some IP Flows mapped to it; the pUE may maintain an active connection to the MCN through a RAN AP; or the cUE may maintain an active connection to the MCN through a RAN AP that may be the same or different from the RAN AP with which the pUE maintains an active connection.

The pUE may detect a loss of the D2D link. Detection of a loss of the D2D link by the pUE may involve one or more of the following: L1 and L2 methods or IP-based information, such as whether IP packets from a D2D peer are arriving over the D2D link or through a network, such as the MCN. A similar implementation may be executed by the cUE (e.g., substantially concurrently). A signaling based notification may be used by a UE, such as one or both of the pUE and the cUE, to notify its respective peer of loss of the D2D link.

When one or both of the pUE and cUE detect a loss of the D2D link, one or both of the pUE and the cUE may move at least some flows, e.g., each flow that was mapped to the D2D link, to an MCN-based connection using flow mobility techniques, e.g., such that connectivity between the pUE and the cUE may be maintained.

Implementations may include IP-Layer D2D connections that may operate based upon DMM concepts. For example, a Distributed Gateway (D-GW) may be configured to operate as a DMM mobility and/or aggregation anchor. A D-GW may be incorporated into one or more of WTRUs 102a, 102b, 102c, or 102d, for instance into one or both of the pUE and the cUE, along with one or more protocol architectures associated with D2D connections, such that one of the UEs may be configured as a UE-GW. The incorporation of a D-GW into one or more of the UEs may include the incorporation of D2D into one or both of hardware or software elements of the D-GW. Either UE of a pair of UEs between which a D2D link may be established may become the D-GW for the D2D link. Both UEs may assume the role of D-GW. D2D discovery as well as the decision making involved in determining which UE becomes the D-GW for a D2D link may be disclosed herein.

FIG. 4 illustrates an example architecture for DMM-based D2D connections. An example UE configured to operate as a UE-GW is illustrated, along with potential D-GW locations and respective DMM-defined interfaces. The architecture illustrated in FIG. 4 is an example, for instance each D-GW depicted may not need to be present. For example, one or more D-GWs may be present at the locations shown; one D-GW may need to be present somewhere in the network. FIG. 4 illustrates DMM-based D2D elements and interfaces, such as the UE/UE-GW and associated connections thereto, and a D2D interface D2D_Uu. D2D_Uu may be a 3GPP-related designation for the D2D interface. The D2D_Uu designation may be used for implementations described herein.

The D-GW function may be used to enhance existing functions in the 3GPP EPC network. The D-GW function may be a part of a local gateway (L-GW), e.g., complementing and/or enhancing the L-GW. The D-GW function may be configured as an enhancement to a Serving Gateway (S-GW) and/or a Packet Data Network Gateway (PDN-GW).

The D-GW may support one or more of the following: S5*, which may be configured as a D-GW-to-D-GW interface; or Gx*, which may be configured as an interface between one or more D-GWs and one or more 3GPP policy control functions (PCRFs).

The S5* interface may support user-plane communication similar to that between the SGW and PGW (S5) or similar functions (e.g., the Mobile Access Gateway (MAG) and Local Mobility Anchor (LMA) as defined for Proxy Mobile IP (PMIP) or Foreign Agent (FA) and Home Agent (HA) as defined for Mobile IP (MIP)). The S5* interface may support per user / per-service (e.g., per IP-flow) tunnels. These tunnels may or may not be secure. Internet Protocol Security (IPsec) or GPRS Tunneling Protocol (GTP) based tunnelling over S5* may be supported by one or more D-GW (e.g., each of the D-GWs). The S5* interface may transport user traffic through an established tunnel. The S5* may be configured for signaling (e.g., flow-specific signaling), which may be necessary to establish paths (e.g., tunneled paths) for user data. For each flow, one of the D-GWs may act as master (e.g., similar to a PDN Gateway PGW/LMA/HA), while the other may act as a slave (e.g., similar to a SGW/MAG/FA). That is, a D-GW as referred to herein may be a gateway such as an LGW, a PGW, etc. Each D-GW may assume different roles for different flows. Once the D-GW roles for each flow are established, they may remain fixed.

Depending on the location of the one or more D-GWs, the PCRF may need to apply policies similar to those applied to the PGW, SGW and L-GW. The Gx* interface may bear similarities to the Gx and Gxc interfaces. One or more of the D-GWs may comprise a DIAMETER Client.

One or more of the D-GWs, such as a D-GW associated with the UE-GW, may be configured to provide services (e.g., fulfilling a role as a mobility anchor for IP services that may require mobility support) to the user and/or network. Providing these services may be the role inherited from the PGW/LMA/HA. When a D-GW serves this role for a particular IP flow, it may be referred to as the anchor D-GW. UE IP addresses used for flows anchored at a particular D-GW may be associated with that particular D-GW (e.g., managed/assigned by the D-GW) and IP flows anchored at the D-GW may be routed through the D-GW. This routing assignment may be static (e.g., it may not be changed without disruption to the associated service). Multiple paths between the UE and the anchoring D-GW may be used simultaneously (e.g., IP Flow Aggregation). Such paths may converge at a D-GW (e.g., a single anchoring D-GW).

One or more of the D-GWs, e.g., the D-GW associated with the UE-GW, may be configured to provide access to IP-based services (e.g., IP networks). Providing access to IP-based services may relate to a role inherited from the SGW/MAG/FA (e.g., with the note that HA may also provide this service and MAG/LMA may be merged). When a D-GW serves this role for an IP flow it may be referred to as the service D-GW, such that each IP Flow mapped through the D-GW for access may be routed through the D-GW. Such mapping and/or routing may be changed dynamically (e.g., in response to IP Flow Mobility decisions). IP Flow Aggregation may allow IP Flows to be associated with multiple service D-GWs.

One or more of the D-GWs, e.g., the D-GW associated with the UE-GW, may provide Network policy enforcement and charging control. The D-GW may implement a Policy and Charging Enforcement Function (PCEF). The PCEF may be based on the policies received from the PCRF, e.g., with modifications to support the role of the D-GW.

Function of the UE-GW may be based on the functionality of a D-GW. The UE-GW may not support IP-routing functions (e.g., each flow anchored at the UE-GW may terminate at that UE and/or access D-GW functions may not be supported except for flows anchored at the UE). The UE-GW may support one or more of the following functions: anchoring of IP flows (e.g., IP address association, IP address management, and/or support of multiple paths for flows terminating at the UE), or PCEF (e.g., in communication with the operator's PCRF and providing policy and charging enforcement to the network operator). A DIAMETER Client may be present in the UE. Policies may be provided by a different policy function (e.g., the Access Network Discovery and Selection Function (ANDSF)) and may be enforced in the UE by a different entity, e.g., a connection manager.

The UE-GW may be configured with a protocol architecture that addresses NB-IFOM and UE-IFOM and allows for use of likely IP flow mobility framework, e.g., one or more of PMIP, GTP or Dual Stack Mobile Internet Protocol (DSMIP).

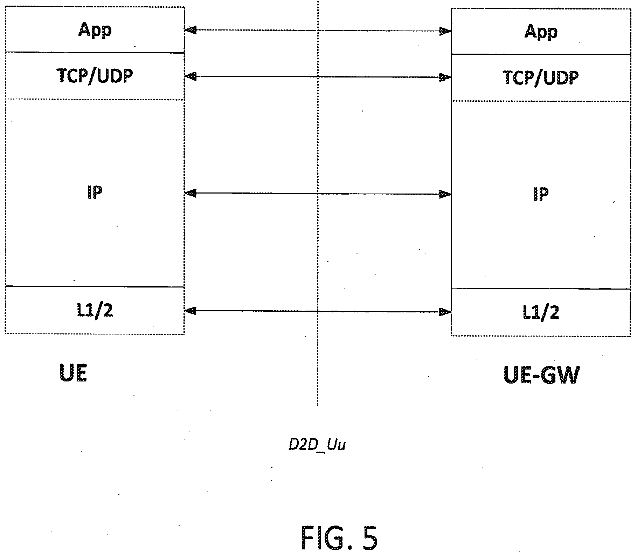

FIG. 5 illustrates an example user plane architecture in which a D2D connection is established between the UE and UE-GW. As illustrated in FIG. 5, a direct IP link may be set up over the D2D_Uu interface. For example, L2 on both sides may be configured to route IP packets with the proper IP destination address directly over D2D_Uu. In the case of 3GPP, L2 may comprise one or more of the following 3GPP Layers: Media Access Control (MAC), Radio Link Control (RLC), Packet Data Convergence Protocol (PDCP), or Radio Resource Control (RRC). In the case of non-3GPP interfaces such as IEEE 802 technologies (e.g. 802.3, 802.11, 802.15, 802.16, 802.22, and the like) L1/2 may include one or more of the following layers: Logical Link Control (LLC), MAC, or Physical (PHY). The role of L2 protocols in 3GPP networks may align with L2 protocols in non-3GPP networks and allow IP to be the Layer 3 (L3) protocol.

Routing of IP packets to the appropriate L2 connection may depend on the nature of the D2D_Uu interface and the requirements on IP Flow management. If UE-to-UE-GW IP traffic is to be mapped to D2D_Uu (e.g., if no IP Flow Segregation is to be applied to UE-to-UE-GW traffic) at least one of the following may be utilized if D2D_Uu is a 3GPP interface, this may be handled by modifications to the RAN protocol stack, (e.g., the PDCP protocol). If D2D_Uu is a non-3GPP interface and Internet Protocol version 4 (IPv4) is used over a shared link, Address Resolution Protocol (ARP) may be utilized to discover the presence of the appropriate destination IP nearby and may configure the routing table accordingly. In a scenario of a dedicated link, point to point protocols such as Point-to-Point Protocol (PPP)/Internet Protocol Control Protocol (IPCP) may be used. If D2D_Uu is a non-3GPP interface and Internet Protocol version 6 (IPv6) is used, IPv6 Neighbor Discovery (ND) may be used to discover the presence of the appropriate destination IP nearby and may configure the routing table accordingly.

IP Flow Segregation may be employed on flows from the non-GW UE to the UE that hosts UE-GW (e.g., the UE-GW). The UE that hosts UE-GW may be allocated at least 2 different IP addresses - one for the GW function (e.g., a GW IP address) and one for standard UE operation (e.g., a non-GW IP address). The non-GW UE may use the non-GW IP address as the destination address to route a flow through the core network (e.g., the MCN). A single IP address may be allocated to the UE-GW and used for suitable functions (e.g., for the D2D GW function and otherwise). Flow-based routing may be utilized at the UE that hosts UE-GW to selectively route flow to and from UE-GW. If D2D_Uu is a 3GPP interface, the multiple routing may be managed, for instance via the PPP links setup by PDCP. When D2D_Uu is a non-3GPP interface, modification of the operation of IPv4 ARP and/or IPv6 Neighbor Discovery (ND) may be required.

Implementations described herein may describe what may happen to the user plane protocol architecture when a D2D link is lost. For example, an IP connection may be initially established as a D2D connection, and, the direct link may become un-viable (e.g., due to user mobility) and the IP connection may need to be maintained through the core network (e.g., the MCN). In such a case, it may matter whether the underlying approach is based on NB-IFOM techniques or UE-IFOM techniques.

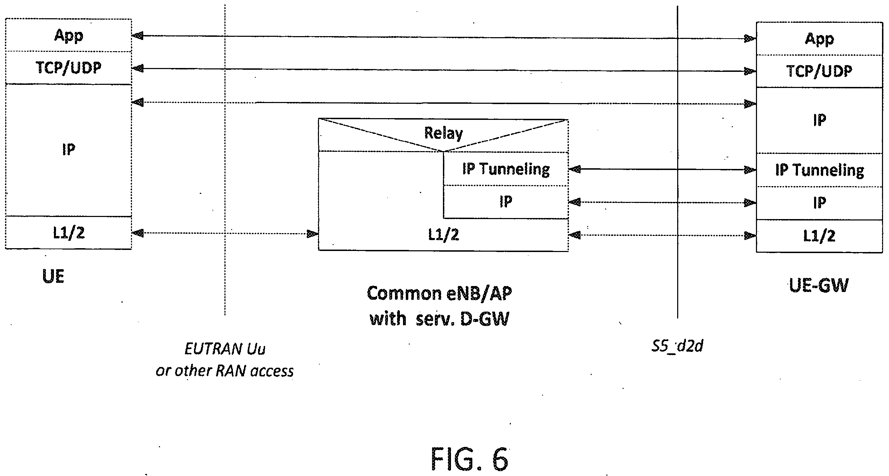

An implementation may feature an indirect user-plane using NB-IFOM. FIG. 6 illustrates a scenario wherein the S-GW is co-located with a network access point (e.g., an eNB or WiFi AP), and the access point is used for both the UE and the UE-GW. IP tunneling may be configured between the Serving D-GW and UE-GW. The tunneling details may depend on whether PMIP or GTP is used over S5_d2d. For PMIP, tunneling may be configured per the protocol spec. For GTP, GTP layer for the user plane (GTP-U) over UDP may be used, e.g., instead of IP Tunneling. GTP-U may include a secure tunneling option as part of the protocol.

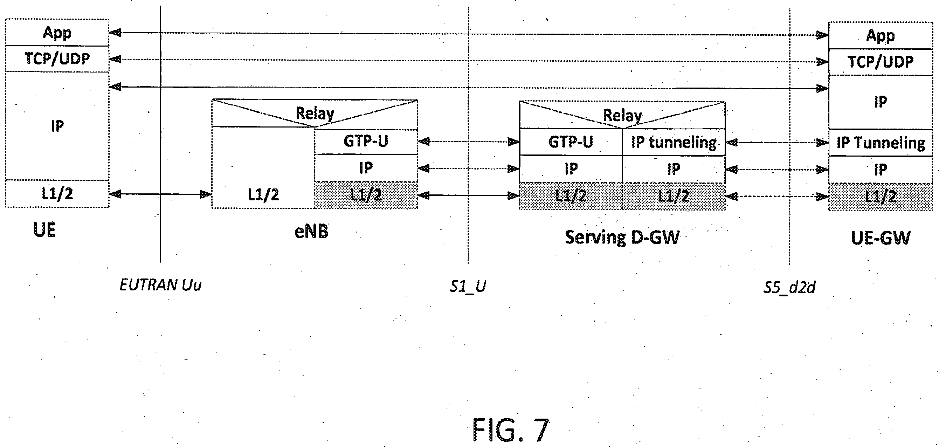

FIG. 7 illustrates a configuration wherein the Serving D-GW is disconnected from the eNB serving the non-GW UE, e.g., using a 3GPP RAN and Core Network. An S1_U interface may be used between the eNB and the Serving D-GW. The L1/2 connection between the eNB and the Serving GW is grayed out in FIG. 7 to indicate that it may be direct; or, the connectivity may be provided by the IP layer, e.g., with GTP-U running over UDP on top of IP. The Serving D-GW may communicate with the UE-GW via S5_d2d as in the scenario of the direct connectivity illustrated in FIG. 6. If the Serving D-GW is co-located with the eNB or AP serving the UE-GW, the L1/2 connection may be over an air interface, such as air interface 116. If the Serving D-GW is remote relative to the eNB or AP serving the UE-GW, the L1/2 connection may not be present or may be a multi-hop connection and the interface between the serving D-GW and the UE-GW may be an IP interface. As in the scenario of common eNB/AP/Serving D-GW, IP tunneling may be replaced by GTP-U/UDP if GTP is used to enable DMM. If in FIG. 7 the eNB serving the non-GW UE is replaced by a non-3GPP AP and the UE-AP interface is a non-3GPP access, the S1_U interface may be replaced with another interface, e.g., S5*.

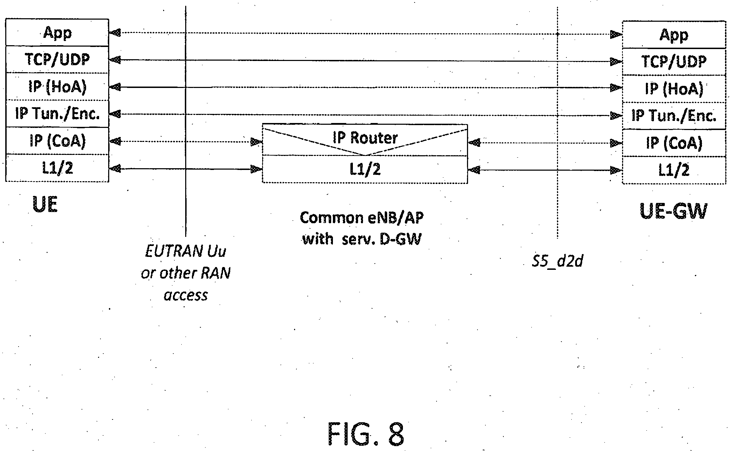

An indirect user-plane with UE-IFOM may be disclosed. FIG. 8 illustrates a scenario wherein the S-GW is co-located with a network access point (e.g., an eNB or WiFi AP), and the access point is used for both the UE and the UE-GW. IP Tunneling or Encapsulation may be used between the UE-GW (e.g., the UE-GW acting as a HA) and the UE to carry traffic with UE Home Address (HoA) over a connection through the D-GW, which may use a Care-of Address (CoA) assigned by the Serving D-GW.

The configuration depicted in FIG. 8 illustrates an example MIP-based approach with HA encapsulation traffic addressed to the HoA (e.g., globally known HoA) into IP traffic using a CoA. Knowledge of the CoA may be limited to the HA and/or within the visited network. This MIP based approach may be used to prevent the need to change IP addresses to which the application sessions is bound, e.g., by preserving the permanent HoA as the IP address used by the application, while changing the CoA in response to WTRU mobility. The CoA may be known to the mobile network (e.g., only be known to the mobile network), for example, it may be limited to use between the WTRU and the HA, while the remote application peer may be limited to awareness of the HoA,

Shielding the remote application peer from the changes of IP addresses due to mobility may be irrelevant in the D2D setting (e.g., where the remote application peer is, by definition, the UE-GW itself). The IP encapsulation step may be omitted in the D2D setting. For example, a Network Access Translator (NAT) may be used at the UE and UE-GW. Although NATs are generally highly complex entities, a simpler form of a NAT, for instance one that replaces HoA for CoA, may be used. A synchronized process of source IP substitution (e.g., at the UE) and destination IP substitution (e.g., at the UE-GW) may be used, e.g., which may save the need for a full-fledged NAT at the UE.

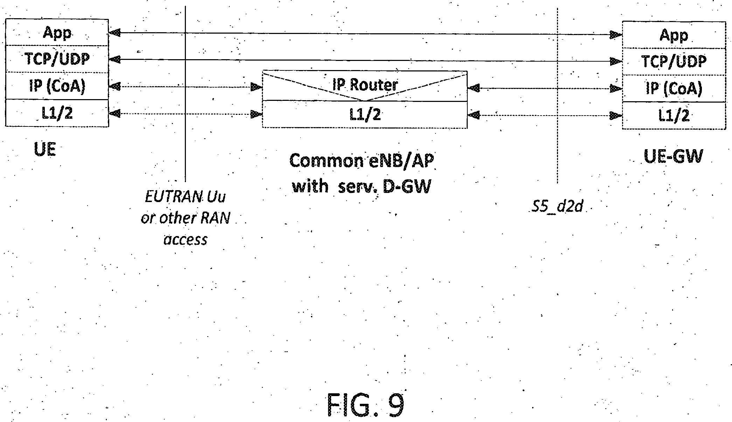

The change described herein may allow the protocol stack architecture illustrated in FIG. 8 to be simplified to an implementation such as that depicted in FIG. 9, wherein the resulting approach may utilize a standard stable IP protocol stack (e.g., with the addition of one of the HoA/CoA IP address translation solutions).

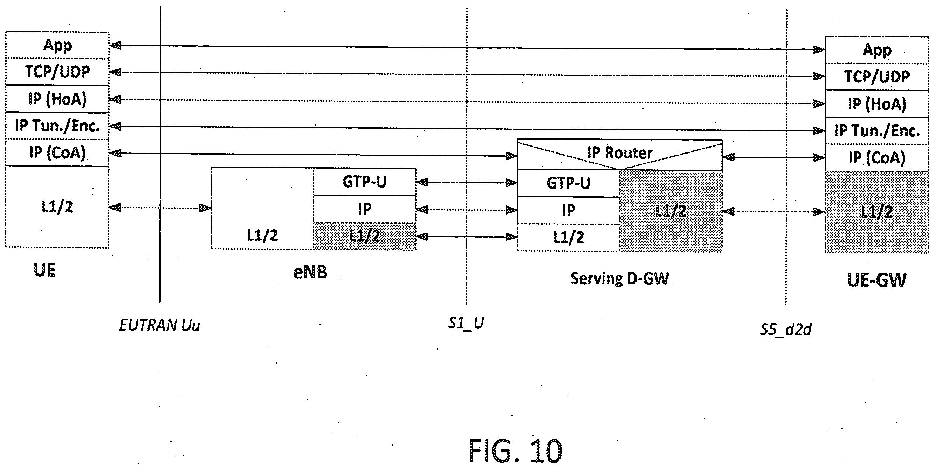

FIG. 10 illustrates a configuration wherein the Serving D-GW is disconnected from the eNB serving the non-GW UE, e.g., using a 3GPP RAN and Core Network. An S1_U interface may be used between the eNB and the Serving D-GW. If the eNB serving the non-GW UE is replaced by a non-3GPP AP and the UE-AP interface is a non-3GPP AP, the S1_U interface may be replaced, for instance by S5*.

The S1_U interface may be used between the eNB and the Serving D-GW. The L 1 /2 connection between eNB and the Serving D-GW is grayed out in FIG. 10 to indicate that it may be direct; or, the connectivity may be provided by the IP layer, for example with GTP-U running over UDP on top of IP. The Serving D-GW may communicate with the UE-GW via S5_d2d as in the scenario of the direct connectivity described herein. If the Serving D-GW is co-located with eNB or AP serving the UE-GW, the L1/2 connection may be over an air-interface, such as air interface 116. If the Serving D-GW is remote relative to the eNB, the L1/2 connection may be omitted or the L1/2 connection may be a multi-hop connection, and, the interface may be an IP interface.

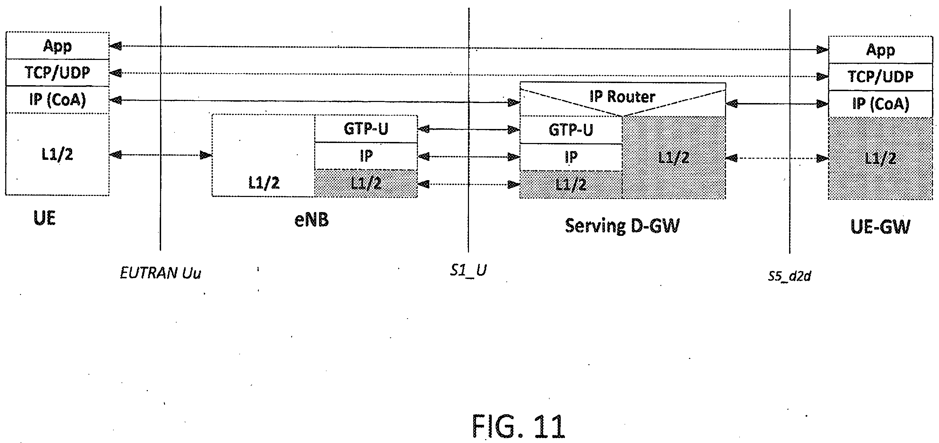

IP traffic using the HoA may be tunneled through another connection (e.g., a CoA-based connection) which may be omitted using the techniques disclosed herein, which may result in an architecture, for example, as illustrated in FIG. 11.

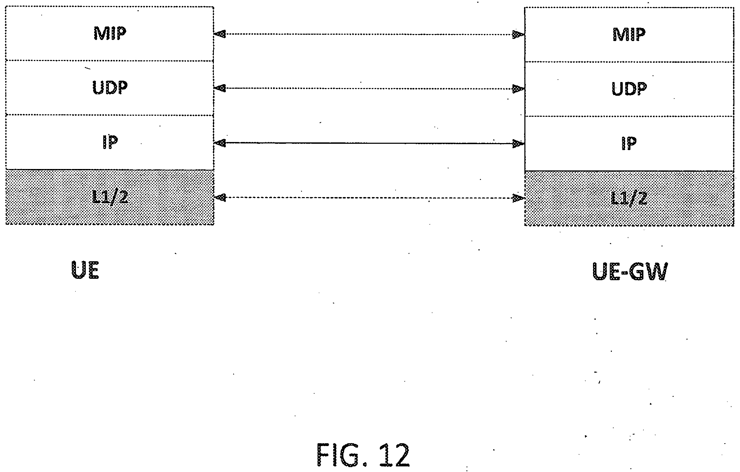

Control-plane architectures may be disclosed. If a D2D link is present, control-plane communication may not take place over the air when NB-IFOM based approaches are used, for example as the control may be performed within UE-GW. For support of UE-IFOM based solutions, control signaling may occur between the UE and the UE-GW, e.g., as depicted in FIG. 12 (e.g., whether or not a direct D2D link is present). If the D2D link is not present, the UE-GW may communicate with the Serving D-GW.

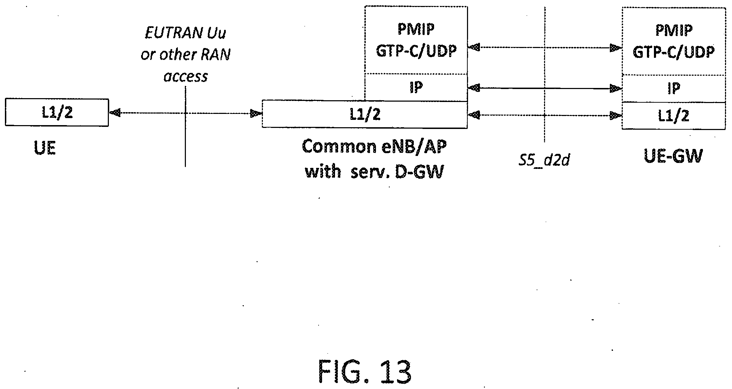

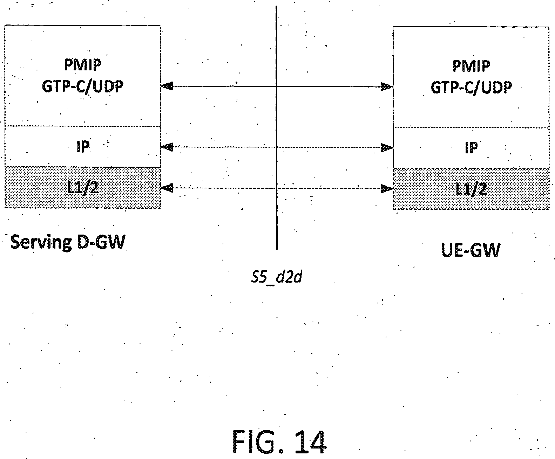

FIG. 13 illustrates an example control plane for a scenario wherein a common eNB or non-3GPP AP may be used by both UEs for network access when NB-IFOM is utilized. FIG. 14 illustrates an example control plate for a scenario wherein the Serving D-GW may not be co-located with the eNB/AP that is used by the non-GW UE.

Inter-public land mobile network (PLMN) operation may be disclosed, for.instance a scenario wherein the UE and the UE-GW are associated with two different operators (e.g., are in two different IP domains). When a direct D2D connection is available, for instance as illustrated in FIG. 5, the UE may be roaming on the UE-GW's network.

If the D2D link is lost and the UE-to-UE-GW connection needs to be maintained, the UE may remain anchored at the UE-GW for the flows established over the D2D link. For such flows, the UE may remain roaming on the UE-GW network. This may be enabled by maintaining the UE roaming on UE-GW's network. Stated differently, once the D2D link is lost, the UE may maintain connectivity with a NB in the UE-GW's network, at least for flows that originated over the D2D link. The UE may establish (e.g., simultaneously establish) a separate connection with a Node B in its home network for flows (e.g., new flows).

D2D discovery and gateway selection (e.g., where a UE participating in the D2D connection may operate as a D2D GW) may be disclosed. Considered herein are one or more of the following: how a UE may discover that a peer (e.g., potential peer) may act as a gateway, how a UE may advertise that it is able to act as a gateway, or what may happen if both UEs may act as gateways.

A UE may include an advertisement indicative of the gateway capability as part of transmissions it may otherwise send in support of proximity detection and discovery (e.g., to advertise the capability of the UE to act as a D2D link gateway). A gateway advertisement message may use one or both of the router advertisement or home agent discovery messages associated with MIP and PMIP operation in IPv6 and/or the router advertisement in IPv4. A UE-GW may advertise itself based on the way other IP GWs, e.g., D-GW in DMM, do so. Extensions may be added to the advertisement to indicate that the router/mobility agent has limited capabilities, e.g., the router/mobility agent may be limited to acting as a gateway for D2D.

D2D discovery may involve assistance from a network, such as the MCN. For example, the network may instruct both UEs how to establish proximity and advertising pertaining to which D2D services the UEs are capable of supporting. As part of such instruction, the network may instruct the UEs as to whether they should act as a UE-GW for the D2D connection (e.g., each particular D2D connection). For instance, a UE may act as a GW for some D2D connections and services while acting as a non-GW UE for other D2D connections and services. With network-assisted D2D setup, GW convention may be avoided through network control.

Both UEs may be allowed to advertise themselves as gateways with different priorities, for example using a priority setting in respective Router Advertisement messages. The UE gateway advertisement priorities may be set by the network. If one or more UEs advertise gateway capability, the UE with the highest priority may assume the gateway role. Conflict resolution may be used to determine which UE should assume the gateway role (e.g., if the priority-based approach is not used or if the UEs advertise the same priority). For example, if a UE advertises itself as a gateway and discovers that a peer UE is also advertising itself as a gateway and both UEs are advertising the same priority, a first UE of the pair may initiate connecting/associating with the gateway of a second UE of the pair, e.g., in accordance with standard processes. The second UE of the pair may initiate connecting/associating with the gateway of the first UE of the pair. The first UE of the pair may generate a random number and may forward the random number to the second UE of the pair as part of setup messaging. The second UE of the pair may generate a random number and may forward the random number to the first UE of the pair as part of setup messaging. The random number may be distinct and a process (e.g., a pre-agreed process) may be used to determine which UE may operate as the gateway. For example, the UE that generated the lowest and/or largest of the numbers may be designated as the gateway. The process may be repeated (e.g., when the random numbers are the same).

D2D fallback may be disclosed (e.g., recovery from the loss of a direct D2D link). A pair of UEs may be assumed to be participating in the D2D link and may maintain a connection (e.g., via a Node B) to the network, such as the MCN. The loss of connection may be limited to the D2D link.

Loss of a D2D link may be detected through low layer monitoring, for instance PHY/MAC link monitoring. The monitored D2D link state may be reported to one or more of the higher layers. D2D link loss may be one of several detectable events.

The low-layer link loss measurement may not indicate link quality (e.g., sufficiently indicate link quality). For example, in certain systems (e.g., some WLAN systems) low-layer monitoring may not take into account congestion that may be present on the wireless network. Congestion of the network may not result in the loss of a wireless link, such as a D2D link. Congestion of the network may not result in reduced observed signal power and may be detected by higher layer protocols. For instance, TCP may detect congestion. TCP congestion (e.g., excessive TCP congestion) on a single-hop D2D link may be a good indicator of effective link loss (e.g., an event that may cause the two communicating UEs to revert to using the network infrastructure). An effective link loss may be treated as a link loss.

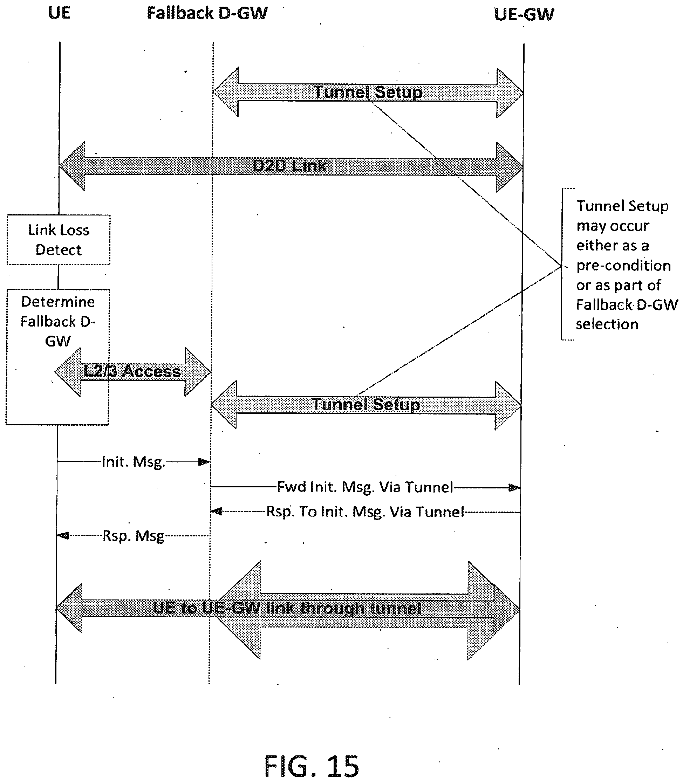

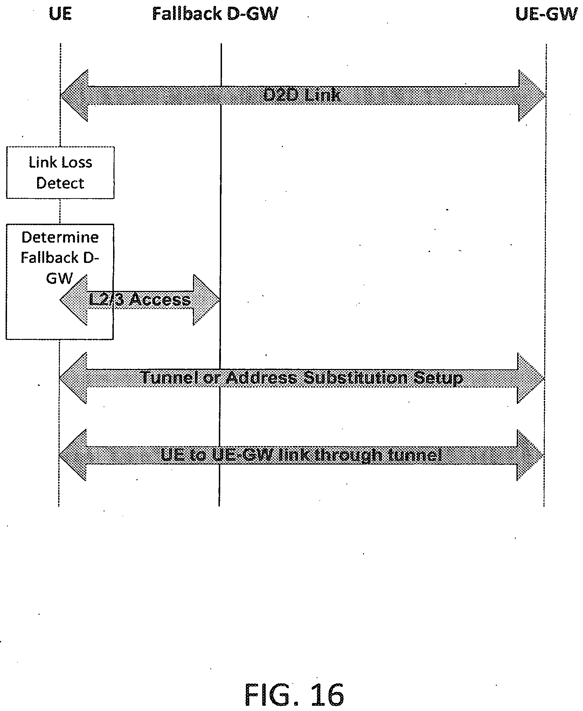

The non-GW UE and the UE-GW (e.g., the pUE and cUE) may respond to detecting a loss of the D2D link (e.g., link-loss detection). FIGS. 15 and 16 illustrate exemplary functionality relating to link-loss recovery by a non-GW UE. FIG. 15 illustrates IP mobility based on a network-controlled mobility protocol (e.g., PMIP). FIG. 16 illustrates IP mobility based on a UE-controlled mobility protocol (e.g., Dual Stack Mobile IP (DSMIP)).

In a network-controlled mobility protocol (e.g., as illustrated in FIG. 15), preconditions may indicate that one or more fallback D-GWs may be designated for the D2D link. The non-GW UE may be aware of the one or more fallback D-GWs. The preconditions may indicate that the UE to UE-GW D2D link is operational. A tunnel (e.g., a PMIP tunnel) may be in place between the fallback D-GW and the UE-GW. The tunnel between the fallback D-GW and the UE-GW may utilize the S5_d2d interface (e.g., as illustrated in FIG. 4).

The non-GW UE may access the list of fallback D-GWs and may identify a D-GW to fall back on (e.g., upon detection of D2D link loss (e.g., as described herein)). The fallback D-GW identification may involve aspects of L2/L3 access to the fallback D-GW, e.g., as described herein.

Once a D-GW for D2D fallback has been identified, the non-GW UE may send an initial communication message intended for the UE-GW to the D-GW. The initial communication message may be a data message, and/or it may carry additional signaling. The fallback D-GW may forward the initial communication message to the UE-GW through an established tunnel; and, the fallback D-GW may strip out signaling which may have been included.

The UE-GW may respond to the non-GW UE (e.g., upon receipt of the message). The response may be required as reception of the response may signal to the non-GW UE that the fallback switch is successful and that the non-GW UE may abandon the D2D link. The generation and timing of a response by the UE-GW may be under the control of the application. A response by the UE-GW may be forced. For example, upon receipt of a first message via the fallback D-GW from the non-GW UE, the UE-GW may initiate a timer associated with the flow. If no outgoing transmission is scheduled for the flow when the timer expires, a special null packet may be generated by the UE-GW and sent to the non-GW UE. A null response packet may be used for each UDP flow. For TCP flows, a SACK may be substituted for a null response packet.

Once the non-GW UE receives a response message via the fallback D-GW, normal communication between the non-GW UE and UE-GW may resume, for instance with the fallback D-GW tunneling the flow to UE-GW.

In a UE-controlled mobility protocol, e.g., as illustrated in FIG. 16, there may not be a tunnel between the fallback D-GW and UE-GW. Once the fallback D-GW has been identified (for instance using the same procedure as may be used for the network-controlled scenario), the non-GW UE may set up a tunnel (e.g., an MIP or similar tunnel) with the UE-GW using a fallback D-GW as a Foreign Agent (e.g., using the local IP address obtained from the fallback D-GW as the CoA). Once this tunnel is set up, the non-GW UE may abandon the D2D link and communicate with the UE-GW via the fallback D-GW. The use of standard MIP tunneling/encapsulation in the D2D scenario may be unnecessary and may introduce complexity. A NAT and/or a synchronized outgoing IP address substitution may be used. Use of a NAT may deal with a single address (e.g., HoA).

Outgoing IP address substitution may result in one or more of the following actions. Upon receipt of an MIP Binding Update message with a CoA from the non-GW UE (e.g., a new CoA), the UE-GW may initiate HoA-to-CoA address substitution on outgoing traffic (e.g., some or all outgoing traffic) with HoA as the destination IP address. UE-GW address substitution may result in a start of a substitution session (e.g., a new substitution session) when the D2D link is lost. UE-GW address substitution may involve substitution of an old CoA tor a new one (e.g., as a result of UE mobility after D2D link is lost). Once the address substitution setup is complete, the UE-GW may issue a Binding Acknowledgement response to the non-GW UE for the new CoA. Upon receipt of a Binding Acknowledgement message from the UE-GW, the non-GW UE may use the HoA-to-CoA address substitution on outgoing traffic (e.g., some or all outgoing traffic) with HoA as the source IP address. Non-GW UE address substitution may result in a start of a substitution session (e.g., a new substitution session) when the D2D link is lost. Non-GW UE address substitution may involve substitution of an old CoA for a new one (e.g., as a result of UE mobility after D2D link is lost).

the non-GW UE may maintain a list of fallback D-GWs with which the non-GW UE may communicate. An L2 link may be established to the network where the D-GW resides (e.g., for a D-GW to act as a fallback D-GW) and a CoA may be allocated by the D-GW (e.g., in the scenario of MIP). Establishment of an L2 link may be fast and seamless (e.g., to maintain quality of experience (QoE) for the user). In UE-controlled mobility protocols, L3 access may be required (e.g., to obtain a CoA) followed by the tunnel setup. In network-controlled mobility protocols, tunnel setup (e.g., typically achieved during pre-setup) may not be required, and other L3 access may not be required (e.g., since the D-GW may be pre-configured to expect data from the non-GW UE).

In network controlled mobility protocols, the fallback D-GW may be pre-configured to receive traffic. Multiple D-GWs may be setup as candidate fallback D-GWs for each D2D link (e.g., because the nature of mobility may be uncertain).

Fallback D-GW selection for UE-controlled mobility scenarios may be disclosed. At a given point each UE in a D2D link may be assumed to maintain a connection to a network access point (e.g., a NodeB, a WiFi AP, etc.). The fallback D-GW may not pre-setup a tunnel with the UE-GW (e.g., for UE-controlled mobility protocols); the D-GW may be designated as the fallback D-GW when loss of the D2D link is detected. The non-GW UE may be connected to a GW function associated with the AP that it may be connected to (e.g., for the purposes of obtaining an IP address for that connection). As described herein, each GW may be assumed to act as a D-GW. That is, a D-GW as referred to herein may be any gateway such as an LGW, a PGW, etc. GWs, for instance PGW, may have additional functionality. A GW with additional functionality may be used as a fallback D-GW and the IP address associated with the GW with additional functionality may be used as a CoA. Delay associated with the fallback D-GW and L2/3 setup may be avoided and the non-GW UE and the UE-GW may proceed to tunnel setup (e.g., similar to the link setup for Dual Stack Mobile IP (DSMIP)).

The D-GW associated with UE's existing network connection may be located deep within the network such that using the D-GW as a fallback D-GW may be inefficient. For example, the connection from the non-GW UE to the network may be for signaling purposes, and the GW that may be associated with the connection from the non-GW UE to the network may be the PGW in the core network. Relying on the PGW (e.g., for D2D fallback) may be sub-optimal if a local gateway shared by the UE and UE-GW exists. One or more of the following may be implemented.

For each D2D link, the UE may be provided with a list of one or more candidate D-GWs. Each candidate D-GW may be associated with an AP (e.g., a Node B, a WiFi AP, etc.), which may help reduce the search space, latency, and/or overhead. The list of candidate D-GWs may be updated (e.g., periodically updated). The D-GW list may be updated when a D2D link re-configuration occurs. A D2D link re-configuration may involve one or more of the following: re-configuration of the D2D list; or a handover event by one of the two UEs so that these are now associated with a new AP. In the latter, the D-GW list provided to each UE may be Node B/AP specific (e.g., the D-GW list may be shortened).

The D-GW list may include GWs providing local and/or broader coverage. If a GW hierarchy exists, the D-GW list may include a hierarchy sub-tree that may be relevant to the UE. If a GW hierarchy does not exist, a GW list may be provided. The GW list may include a scope property that may be associated with each D-GW so that the UE may determine which GWs are local and which GWs are not.

The non-GW UE and the UE-GW may be located in close proximity to each other. A local GW (e.g., the GW closest to one or both of the non-GW UE and the UE-GW) may be chosen as a fallback gateway. The non-GW UE may attempt to obtain a CoA address and establish a tunnel to the UE-GW from the local (e.g., most local) GW first (e.g., when D2D link failure is detected). The non-GW UE may work through the list of GWs (e.g., up the D-GW hierarchy sub-tree) until the tunnel is successful (e.g., if tunnel establishment with the most local GW fails).

Fallback D-GW selection for network-controlled mobility may be disclosed. As described herein, for network-controlled mobility, maintenance of potentially multiple tunnels (e.g., to support D2D fallback) may present an issue. One or more of the following may limit this by tying the selection of a fallback D-GW to an AP/Node B that the non-GW UE is connected to. Upon establishment of a D2D link, the NodeB/AP may select a fallback D-GW for the non-GW UE from a set of Gateways that may be available to the NodeB/AP. For example, a fallback D-GW selection may be based on operator policies, which may be included in the link/bearer setup process, and/or may otherwise be provided. During a handover that preserves an existing D2D link, the target NodeB/AP may select a fallback D-GW, e.g., based on operator policies, which may be included in the link/bearer setup, and/or may otherwise be provided.

The fallback D-GW may establish a tunnel to the UE-GW. A single tunnel may be established for each D2D link. Tunnel establishment timing may vary, for instance by policy control. For example, it may be determined by policy that the tunnel may not be established until it is required, which may result in the penalty of delay in fallback link activation.

Upon detection of loss of D2D link, the non-GW UE may forward data over the established L2 link to the NodeB/AP. Fallback D-GW selection and the L2 link setup process may not be required. Upon receipt of data from the non-GW UE (e.g., with UE-GW's IP address as a destination), the NodeB/AP may forward the data to the designated fallback D-GW.

The access network and/or associated D-GW that the non-GW UE is connected to may not be optimal from the point of view of D2D fallback (e.g., for the purposes of core network connectivity). The non-GW UE and the UE-GW may have access to the same WiFi network, but the non-GW UE may not be connected to the WiFi network that the UE-GW is connected to. The UE may be connected to a 3GPP access network (e.g., to provide a best QoS for CN signaling). The local D-GW (e.g., the best D-GW) associated with the WiFi access network may be available for D2D fallback; as provided herein the local D-GW may not be used. The Core Network (CN) PDN Gateway (PGW) may be used, which may not be optimal. Fallback GW selection may be modified as follows.

Access networks may advertise D-GWs that may be available and/or may be queried for D-GWs that are available. The queries may not require that the non-GW UE associate to the access network. For example, for WiFi, Access Network Query Protocol (ANQP) may be used. The D-GW advertisements may take the form of IP router advertisements. The non-GW UE and UE-GW may negotiate one or more candidate D-GWs to use as D2D fallback GWs. The non-GW UE may do one or more of the following (e.g., based on a result of the negotiation): select a network to connect to, go through the L2 access procedure, or indicate that the non-GW UE has an active D2D link with the UE-GW. This may cause the D-GW associated with the network to be designated as a D2D fallback GW.

Upon detection of loss of the D2D link, the non-GW UE may forward data over the established L2 link to the NodeB/AP. Fallback D-GW selection and L2 link setup may not be required. Upon receipt of data from the non-GW UE with the UE-GW's IP address as destination address, the NodeB/AP may forward the received data to the designated fallback D-GW.

An example D2D link-loss recovery employed by a UE-GW may be disclosed. D2D link-loss recovery used by a UE-GW may be simpler than that used by the non-GW UE. For example, as described herein, a fallback GW may be assumed to have been selected by the non-GW UE and/or the UE-GW. The UE-GW may already have set up connections with the fallback GW (e.g., tunneling, etc.).

Upon detection of loss of the D2D link, the UE-GW may route traffic to the non-GW UE through the fallback GW. In network-controlled mobility, reception of traffic from the UE-GW via the fallback GW may serve as an indication to the non-GW UE to move outbound traffic towards the fallback GW. In UE-controlled mobility, reception of an initial message via the fallback GW may be treated by the UE-GW as an indication of link-loss and the UE-GW may re-route traffic accordingly.

Restoration of a direct D2D link may be disclosed. Once the D2D link is restored following a loss, flows that originated as D2D flows may be moved back to the D2D link.

Typical flow mobility procedures may be employed (e.g., to move flows back to a reestablished D2D link). At least one flow that was originally mapped to the D2D link may be assumed to survive and the UE-GW function may remain active and the non-GW UE may retain the IP address assigned by the UE-GW.

Re-establishment of a direct D2D link may involve one or more of the following. Initially, the D2D link may be restored. This may be achieved with an L1/2 technique, which may include link re-discovery.

Once the D2D link is restored, the UE-GW may advertise as a router over the restored D2D link and/or may respond to ARP/ND discovery requests. The non-GW UE may be able to discover that the UE-GW is reachable. Flows (e.g., flows that may be mapped to the direct D2D link) may be moved back to the direct D2D link, for example using IFOM techniques.

If none of the original D2D flows survive, IP-level connectivity may not be retained. For example, the non-GW UE and/or the UE-GW may deprecate the IP address and the UE-GW may deactivate GW functionality. When the D2D link is re-established, the D2D link may be treated as a new D2D link.

Although features and elements are described above in particular combinations, one of ordinary skill in the art will appreciate that each feature or element may be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method to manage communications, the method comprising:
detecting a loss of a device to device, D2D, connection between a first wireless transmit/receive unit, WTRU, and a second WTRU;
receiving a list of candidate fallback gateways via which the first WTRU may communicate with the second WTRU upon detection of loss of the D2D connection;
determining a fallback gateway, GW, associated with a network based on the list of candidate fallback gateways;
sending a communication to the fallback GW, wherein the communication comprises an indication related to the second WTRU; and
receiving a response from the fallback GW.

2. The method of claim 1, further comprising determining that a fallback is successful based on reception of the response.

3. The method of claim 1, further comprising establishing a tunnel from the first WTRU to the second WTRU, via the determined fallback GW.

4. The method of claim 1, wherein the indication comprises a message intended for the second WTRU.

5. The method of claim 1, wherein the indication comprises additional signaling.

6. The method of claim 1, wherein the response includes at least one of a null response packet or a selective acknowledgment.

7. The method of claim 1, wherein the D2D connection uses a home address, HoA, internet protocol, IP, address.

8. The method of claim 1, further comprising establishing a connection with the fallback GW using a care of address.

9. The method of claim 1, wherein detecting the loss of the D2D connection comprises at least one of a low-layer link measurement or a transmission control protocol, TCP, congestion measurement.

10. The method of claim 1, further comprising abandoning the D2D connection based on the response.

11. A first wireless transmit/receive unit, WTRU, comprising:
a processor configured at least in part to:
detect a loss of a device to device, D2D, connection between the first WTRU and a second WTRU;
receive a list of candidate fallback gateways via which the first WTRU may communicate with the second WTRU upon detection of loss of the D2D connection;
determine a fallback gateway, GW, associated with a network based on the list of candidate gateways;
send a communication to the fallback GW, wherein the communication comprises an indication related to the second WTRU; and
receive a response from the fallback GW.

12. The first WTRU of claim 11, wherein the processor is further configured to determine that a fallback is successful based on reception of the response.

13. The first WTRU of claim 11, wherein the processor is further configured to establish a tunnel from the first WTRU to the second WTRU, via the determined fallback GW.

14. The first WTRU of claim 11, wherein the indication comprises a message intended for the second WTRU.

15. The first WTRU of claim, 11, wherein the indication comprises additional signaling.

16. The first WTRU of claim 11, wherein the response includes at least one of a null response packet or a selective acknowledgment.

17. The first WTRU of claim 11, wherein the D2D connection uses a home address, HoA, internet protocol, IP, address.

18. The first WTRU of claim 11, wherein the processor is further configured to establish a connection with the fallback GW using a care of address.

19. The first WTRU of claim 11, wherein detection of the loss of the D2D connection comprises at least one of a low-layer link measurement or a transmission control protocol, TCP, congestion measurement.

20. The first WTRU of claim 11, wherein the processor is further configured to abandon the D2D connection based on the response.

## Patentansprüche

1. Verfahren zum Verwalten von Kommunikationen, wobei das Verfahren Folgendes umfasst:
Detektieren eines Verlusts einer Device-to-Device (D2D)-Verbindung zwischen einer ersten Drahtlos-Sende- und -Empfangs-Einheit (Wireless Transmit/Receive Unit, WTRU) und einer zweiten WTRU;
Empfangen einer Liste von in Frage kommenden Fallback-Gateways, über die die erste WTRU mit der zweiten WTRU kommunizieren kann, wenn ein Verlust der D2D-Verbindung detektiert wird;
Bestimmen eines Fallback-Gateways (GW), der einem Netz zugeordnet ist, auf der Basis der Liste von in Frage kommenden Fallback-Gateways;
Senden einer Kommunikation an den Fallback-GW, wobei die Kommunikation einen Hinweis auf die zweite WTRU umfasst; und
Empfangen einer Antwort von dem Fallback-GW.

2. Verfahren nach Anspruch 1, das des Weiteren umfasst, auf der Basis des Empfangens der Antwort zu bestimmen, dass ein Fallback erfolgreich ist.

3. Verfahren nach Anspruch 1, das des Weiteren umfasst, einen Tunnel von der ersten WTRU zu der zweiten WTRU über den bestimmten Fallback-GW herzustellen.

4. Verfahren nach Anspruch 1, wobei der Hinweis eine Nachricht umfasst, die für die zweite WTRU gedacht ist.

5. Verfahren nach Anspruch 1, wobei der Hinweis zusätzliche Zeichengaben umfasst.

6. Verfahren nach Anspruch 1, wobei die Antwort ein Null-Antwort-Paket und/oder eine selektive Bestätigung enthält.

7. Verfahren nach Anspruch 1, wobei die D2D-Verbindung eine Home Address (HoA) Internet Protocol (IP)-Adresse verwendet.

8. Verfahren nach Anspruch 1, das des Weiteren das Aufbauen einer Verbindung mit dem Fallback-GW unter Verwendung einer Care-of-Adresse umfasst.

9. Verfahren nach Anspruch 1, wobei das Detektieren des Verlustes der D2D-Verbindung eine Low-Layer-Link-Messung und/oder eine Transmission Control Protocol (TCP)-Datenstaumessung umfasst.

10. Verfahren nach Anspruch 1, das des Weiteren umfasst, die D2D-Verbindung auf der Basis der Antwort aufzugeben.

11. Erste Drahtlos-Sende- und -Empfangs-Einheit (Wireless Transmit/Receive Unit, WTRU), die Folgendes umfasst:
einen Prozessor, der mindestens teilweise für Folgendes konfiguriert ist:
Detektieren eines Verlusts einer Device-to-Device (D2D)-Verbindung zwischen einer ersten WTRU und einer zweiten WTRU;
Empfangen einer Liste von in Frage kommenden Fallback-Gateways, über die die erste WTRU mit der zweiten WTRU kommunizieren kann, wenn ein Verlust der D2D-Verbindung detektiert wird;
Bestimmen eines Fallback-Gateways (GW), der einem Netz zugeordnet ist, auf der Basis der Liste von in Frage kommenden Fallback-Gateways;
Senden einer Kommunikation an den Fallback-GW, wobei die Kommunikation einen Hinweis auf die zweite WTRU umfasst; und
Empfangen einer Antwort von dem Fallback-GW.

12. Erste WTRU nach Anspruch 11, wobei der Prozessor des Weiteren dafür konfiguriert ist, auf der Basis des Empfangens der Antwort zu bestimmen, dass ein Fallback erfolgreich ist.

13. Erste WTRU nach Anspruch 11, wobei der Prozessor des Weiteren dafür konfiguriert ist, einen Tunnel von der ersten WTRU zu der zweiten WTRU über den bestimmten Fallback-GW herzustellen.

14. Erste WTRU nach Anspruch 11, wobei der Hinweis eine Nachricht umfasst, die für die zweite WTRU gedacht ist.

15. Erste WTRU nach Anspruch, 11, wobei der Hinweis zusätzliche Zeichengaben umfasst.

16. Erste WTRU nach Anspruch 11, wobei die Antwort ein Null-Antwort-Paket und/oder eine selektive Bestätigung enthält.

17. Erste WTRU nach Anspruch 11, wobei die D2D-Verbindung eine Home Address (HoA) Internet Protocol (IP)-Adresse verwendet.

18. Erste WTRU nach Anspruch 11, wobei der Prozessor des Weiteren dafür konfiguriert ist, eine Verbindung mit dem Fallback-GW unter Verwendung einer Care-of-Adresse herzustellen.

19. Erste WTRU nach Anspruch 11, wobei das Detektieren des Verlustes der D2D-Verbindung eine Low-Layer-Link-Messung und/oder eine Transmission Control Protocol (TCP)-Datenstaumessung umfasst.

20. Erste WTRU nach Anspruch 11, wobei der Prozessor des Weiteren dafür konfiguriert ist, die D2D-Verbindung auf der Basis der Antwort aufzugeben.

## Revendications

1. Procédé de gestion de communication, le procédé comprenant :
la détection d'une perte d'une connexion de dispositif à dispositif, D2D, entre une première unité émettrice-réceptrice sans fil, WTRU, et une deuxième WTRU ;
la réception d'une liste de passerelles de repli candidates par l'intermédiaire desquelles la première WTRU peut communiquer avec la deuxième WTRU à la détection d'une perte de la connexion D2D ;
la détermination d'une passerelle, GW, de repli associée à un réseau sur la base de la liste de passerelles de repli candidates ;
l'envoi d'une communication à la GW de repli, dans lequel la communication comprend une indication relative à la deuxième WTRU ; et
la réception d'une réponse en provenance de la GW de repli.

2. Procédé selon la revendication 1, comprenant en outre la détermination qu'un repli est réussi sur la base de la réception de la réponse.

3. Procédé selon la revendication 1, comprenant en outre l'établissement d'un tunnel de la première WTRU à la deuxième WTRU, par l'intermédiaire de la GW de repli déterminée.

4. Procédé selon la revendication 1, dans lequel l'indication comprend un message destiné à la deuxième WTRU.

5. Procédé selon la revendication 1, dans lequel l'indication comprend une signalisation supplémentaire.

6. Procédé selon la revendication 1, dans lequel la réponse comprend au moins l'un d'un paquet de réponse nul ou d'un accusé de réception sélectif.

7. Procédé selon la revendication 1, dans lequel la connexion D2D utilise une adresse de protocole Internet, IP, d'adresse de rattachement, HoA.

8. Procédé selon la revendication 1, comprenant en outre l'établissement d'une connexion avec la GW de repli en utilisant une adresse temporaire.

9. Procédé selon la revendication 1, dans lequel la détection de la perte de la connexion D2D comprend au moins l'une d'une mesure de liaison de couche basse ou d'une mesure d'encombrement de protocole de commande de transmission, TCP.

10. Procédé selon la revendication 1, comprenant en outre l'abandon de la connexion D2D sur la base de la réponse.

11. Première unité émettrice-réceptrice sans fil, WTRU, comprenant :
un processeur configuré au moins en partie pour effectuer :
la détection d'une perte d'une connexion de dispositif à dispositif, D2D, entre la première WTRU et une deuxième WTRU ;
la réception d'une liste de passerelles de repli candidates par l'intermédiaire desquelles la première WTRU peut communiquer avec la deuxième WTRU à la détection d'une perte de la connexion D2D ;
la détermination d'une passerelle, GW, de repli associée à un réseau sur la base de la liste de passerelles de repli candidates ;
l'envoi d'une communication à la GW de repli, dans laquelle la communication comprend une indication relative à la deuxième WTRU ; et
la réception d'une réponse en provenance de la GW de repli.

12. Première WTRU selon la revendication 11, dans laquelle le processeur est en outre configuré pour effectuer la détermination qu'un repli est réussi sur la base de la réception de la réponse.

13. Première WTRU selon la revendication 11, dans laquelle le processeur est en outre configuré pour effectuer l'établissement d'un tunnel de la première WTRU à la deuxième WTRU, par l'intermédiaire de la GW de repli déterminée.

14. Première WTRU selon la revendication 11, dans laquelle l'indication comprend un message destiné à la deuxième WTRU.

15. Première WTRU selon la revendication 11, dans laquelle l'indication comprend une signalisation supplémentaire.

16. Première WTRU selon la revendication 11, dans laquelle la réponse comprend au moins l'un d'un paquet de réponse nul ou d'un accusé de réception sélectif.

17. Première WTRU selon la revendication 11, dans laquelle la connexion D2D utilise une adresse de protocole Internet, IP, d'adresse de rattachement, HoA.

18. Première WTRU selon la revendication 11, dans laquelle le processeur est en outre configuré pour effectuer l'établissement d'une connexion avec la GW de repli en utilisant une adresse temporaire.

19. Première WTRU selon la revendication 11, dans laquelle la détection de la perte de la connexion D2D comprend au moins l'une d'une mesure de liaison de couche basse ou d'une mesure d'encombrement de protocole de commande de transmission, TCP.

20. Première WTRU selon la revendication 11, dans laquelle le processeur est en outre configuré pour effectuer l'abandon de la connexion D2D sur la base de la réponse.
